# EUROPÄISCHE PATENTSCHRIFT

(11) **EP 3 025 188 B1**
(45) Veröffentlichungstag und Bekanntmachung des Hinweises auf die Patenterteilung: **29.06.2022**
(21) Anmeldenummer: 14742559.9
(22) Anmeldetag: 25.07.2014
(51) Int. Cl.: G02C 7/08, G02B 27/01

(54) **ANZEIGEVORRICHTUNG MIT EINEM BRILLENGLAS**
SPECTACLE LENS AND DISPLAY DEVICE COMPRISING SUCH A SPECTACLE LENS
VERRE DE LUNETTES ET DISPOSITIF D'AFFICHAGE COMPORTANT UN TEL VERRE DE LUNETTES

(30) Priorität: 26.07.2013 DE 102013214700
(43) Veröffentlichungstag der Anmeldung: 01.06.2016
(73) Patentinhaber: tooz technologies GmbH, 73430 Aalen (DE)
(72) Erfinder: DOBSCHAL, Hans-Jürgen, 99518 Bad Sulza (DE); LINDIG, Karsten, 99084 Erfurt (DE)
(74) Vertreter: Patentanwälte Geyer, Fehners & Partner mbB
(86) Internationale Anmeldenummer: PCT/EP2014/066113
(87) Internationale Veröffentlichungsnummer: WO 2015/011288

(56) Entgegenhaltungen:
- EP-A1- 2 418 073
- WO-A1-2008/089992
- WO-A1-2008/090000
- DE-A1-102009 045 128
- DE-A1-102011 007 811
- DE-A1-102011 007 812
- US-A1- 2011 175 799

## Beschreibung

Die vorliegende Erfindung betrifft eine Anzeigevorrichtung mit den Merkmalen des Oberbegriffs des Anspruchs 1.

Bei solchen Anzeigevorrichtungen besteht die Schwierigkeit, dass das durch Reflexion (z.B. Totalreflexion) im Brillenglas geführte Bild bzw. die entsprechende Lichtwelle z.B. von den gekrümmten Oberflächenradien beeinflusst wird, so dass nach jeder Reflexion ein anderer Zustand der ausbreitenden Welle vorhanden ist. Insbesondere treten bei der Führung mittels Totalreflexion durch den totalreflexionsmäßig bedingten schrägen Einfall auf die gekrümmten Flächen (Vorder- und Rückseite) Fehler wie Astigmatismus und Koma auf. Dabei spielt es keine Rolle, ob das Licht vor Eintreten in das Brillenglas kollimiert war oder nicht.

Des weiteren besteht die grundsätzliche Schwierigkeit, dass der Durchmesser des durch das Brillenglas geführten Lichtbündels in die Richtung vom Auskoppelabschnitt hin zum Einkoppelabschnitt gesehen zunimmt, so dass nur ein begrenzter Lichtleitwert durch das Brillenglas abschattungsfrei geführt werden und es somit zu einer unerwünschten Vignettierung kommen kann.

Um diese Vignettierung zu vermeiden, könnte man den Auskoppelabschnitt mit einer relativ starken positiven Brechkraft ausbilden, wobei dann die dadurch geänderte Gesamtbrennweite, welche durch ein Bilderzeugungsmodul der Anzeigevorrichtung vorgegeben ist, mittels einer Anpassung der Brechkraft des Einkoppelabschnitts zu korrigieren ist. Dies führt allerdings zu sehr angespannten optischen Verhältnissen. Insbesondere werden durch die kürzere Brennweite des Auskoppelabschnitts fokussierte Bündel mehrfach während der Totalreflexion unter sehr großen Einfallswinkel über die gekrümmten Brillenflächen geführt, wodurch Bildfehler wie Astigmatismus und Koma generiert werden und die Gesamtperformance der Abbildung sehr stark leidet.

Die DE 10 2011 007 811 A1 zeigt eine Anzeigevorrichtung der eingangs genannten Art. Die WO 2008/090000 A1, die WO 2008/089992 A1 und die US 2011/0175799 A1 zeigen jeweils eine Brille zur Dateneinspiegelung.

Ausgehend hiervon ist es daher Aufgabe der Erfindung, eine Anzeigevorrichtung der eingangs genannten Art so zu verbessern, dass eine möglichst abschattungsfreie Abbildung realisiert wird, um eine große Austrittspupille und ein großes Sichtfeld (field of view) zu ermöglichen.

Die Erfindung ist im Anspruch 1 definiert. Vorteilhafte Weiterbildungen sind in den abhängigen Ansprüchen angegeben.

Man nutzt somit die Tatsache aus, dass der gezielt "verdickte" Randbereich des Brillenglases ein Bereich ist, in dem das Licht des erzeugten Bildes einen großen Bündeldurchmesser aufweist, so dass die Abschattung vermieden wird, und dass dieser Bereich außerhalb des Bereichs liegt, durch den der Benutzer bei aufgesetzter Anzeigevorrichtung durch das Brillenglas blickt, so dass kein Eingriff in das Sehfeld des Benutzers der Anzeigevorrichtung vorliegt, der vom Benutzer als nachteilig angesehen wird, da aufgrund der Verdickung des Randbereichs dieser nicht mehr die vorbestimmte optische Abbildungsfunktion bereitstellt.

Durch diese erfindungsgemäße Ausbildung des Krümmungsverlaufs im Randbereich kann somit die Vignettierung deutlich verringert werden und wird ferner erreicht, dass die Einfallswinkel bei einer Totalreflexion nicht zu groß werden, wodurch Astigmatismus und Koma vermieden bzw. verringert werden kann.

Insbesondere kann der Einkoppel- und/oder Auskoppelabschnitt eine abbildende Wirkung aufweisen. So kann z.B. der Einkoppelabschnitt eine Kollimationswirkung aufweisen.

Der Einkoppel- und/oder Auskoppelabschnitt führt bevorzugt eine Strahlengangfaltung durch.

Bei dem erfindungsgemäßen Brillenglas kann nur der Krümmungsverlauf der Rückseite im Randbereich vom entsprechenden vorbestimmten Krümmungsverlauf der Rückseite im Randbereich abweichen. Dies führt in vorteilhafter Weise dazu, dass der dickere Randbereich von außen kaum wahrnehmbar ist.

Der abweichende Krümmungsverlauf ist so ausgelegt, dass ein Abbildungsfehler des Brillenglases korrigiert wird, der beim Führen des erzeugten Bildes vom Einkoppel- bis zum Auskoppelabschnitt durch das Brillenglas auftritt. So kann z.B. Astigmatismus und/oder Koma korrigiert werden.

Der abweichende Krümmungsverlauf kann einer nicht sphärischen Fläche entsprechen. Insbesondere kann er einer Freiformfläche entsprechen, die nicht sphärisch ist und keine Rotationssymmetrie aufweist. Des weiteren kann die Freiformfläche zusätzlich auch noch keine Spiegelsymmetrie aufweisen.

Der Randbereich beginnt z.B. ab einer Blickrichtung von größer als 20°, 30° oder 40° (insbesondere bezogen auf die Richtung bei Geradeausblick).

Der Einkoppelabschnitt kann auch einen Bereich einer die Vorder- und Rückseite verbindenden Stirnfläche des Brillenglases umfassen. Insbesondere kann dieser Bereich der Stirnfläche eine abbildende Wirkung aufweisen.

Der Einkoppelabschnitt kann refraktiv und/oder reflektiv ausgebildet sein.

Der Randbereich kann sich bis zu einer Stirnfläche erstrecken, die die Vorder- und Rückseite verbindet. Insbesondere ist der Randbereich am Rand des Brillenglases angeordnet und/oder erstreckt sich, in Draufsicht auf das Brillenglas gesehen, nicht entlang des gesamten Umfangs des Brillenglases. Die Erstreckung in Umfangsrichtung kann z.B. kleiner als 45°, 30° oder 15° sein. Es ist jedoch auch möglich, dass sich der Randbereich, in Draufsicht auf das Brillenglas gesehen, entlang des gesamten Umfangs des Brillenglases erstreckt bzw. ringförmig ist.

Der vorbestimmte Krümmungsverlauf von Vorder- und Rückseite kann z.B. jeweils sphärisch sein. Die sphärischen Krümmungsverläufe können konzentrisch sein, so dass die vorbestimmte optische Abbildungsfunktion eine Abbildung mit Brechkraft null ist. Natürlich kann die vorbestimmte optische Abbildungsfunktion eine Brechkraft ungleich null aufweisen und z.B. zur Fehlsichtigkeitskorrektur dienen.

Die Führung des erzeugten Bildes im Brillenglas kann durch Reflexion bzw. Reflexionen an der Vorderseite und/oder der Rückseite erfolgen. Dazu kann auf den entsprechenden Abschnitten der Vorder- und Rückseite eine reflektive Beschichtung oder eine teilreflektive Beschichtung vorgesehen sein. Alternativ ist es möglich, dass die Reflexion an Vorder- und/oder Rückseite jeweils eine innere Totalreflexion ist. In diesem Fall ist keine reflektive oder teilreflektive Beschichtung auf der Vorder- oder Rückseite notwendig.

Es ist auch möglich, dass zumindest eine reflektive Schicht im Brillenglas ausgebildet ist, so dass die Führung durch Reflexion an der Vorder- oder Rückseite einerseits und an der Reflexionsschicht andererseits erfolgt. Auch in diesem Fall kann die Reflexion an der Vorder-oder Rückseite durch innere Totalreflexion oder durch Reflexion aufgrund einer reflektive oder teilreflektiven Beschichtung erfolgen. Ferner können auch zwei reflektive Schichten im Brillenglas voneinander beabstandet ausgebildet sein, wobei die Führung im Brillenglas (zumindest über einen gewissen Abschnitt) durch Reflexionen an beiden Schichten erfolgt. Natürlich können die beschriebenen Arten der Führung des Bildes im Brillenglas auch miteinander kombiniert werden.

Das Brillenglas ist somit insbesondere so ausgebildet, dass ein über den Einkoppelabschnitt in das Brillenglas eingekoppeltes Bild im Brillenglas durch Reflexionen bis zum Auskoppelabschnitt geführt und über den Auskoppelabschnitt aus dem Brillenglas ausgekoppelt wird.

Die Abbildungsoptik kann das Brillenglas als einziges optisches Element aufweisen. Es ist jedoch auch möglich, dass die Abbildungsoptik neben dem Brillenglas ein weiteres optisches Element oder mehrere weitere optische Elemente umfasst.

Ferner ist es möglich, zwischen dem Brillenglas und dem Bilderzeugungsmodul, das auch als Bildgebermodul bezeichnet werden kann, eine Kollimationsoptik anzuordnen, so dass das Licht vom Bildgebermodul als kollimiertes Bündel in das Brillenglas eingekoppelt wird. Die Kollimationsoptik kann Teil der Abbildungsoptik sein.

Das Bilderzeugungsmodul kann insbesondere einen flächigen Bildgeber aufweisen, wie z.B. ein LCD-Modul, ein LCoS-Modul oder ein OLED-Modul. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung ist insbesondere so ausgebildet, dass die zur Erzeugung des virtuellen Bildes beitragenden Lichtstrahlen alle die gleiche Anzahl von Reflexion zwischen Umlenkabschnitt und Auskoppelabschnitt erfahren.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine Detailschnittansicht des rechten Brillenglases 3 der Anzeigevorrichtung 1 von Figur 1;
- Fig. 3a: eine Draufsicht von vorne auf das Brillenglas 3 von Fig. 1 ;
- Fig. 3b: eine Draufsicht von vorne auf das Brillenglas 3 von Fig. 1 gemäß einer erfindungsgemäßen Abwandlung;
- Fig. 4: eine Schnittansicht gemäß Figur 2 eines herkömmlichen Brillenglases;
- Fig. 5: eine Schnittansicht gemäß Figur 2 eines weiteren herkömmlichen Brillenglases, und
- Fig. 6: eine Schnittansicht gemäß Figur 2 eines Brillenglases einer weiteren Ausführungsform der erfindungsgemäßen Anzeigevorrichtung.

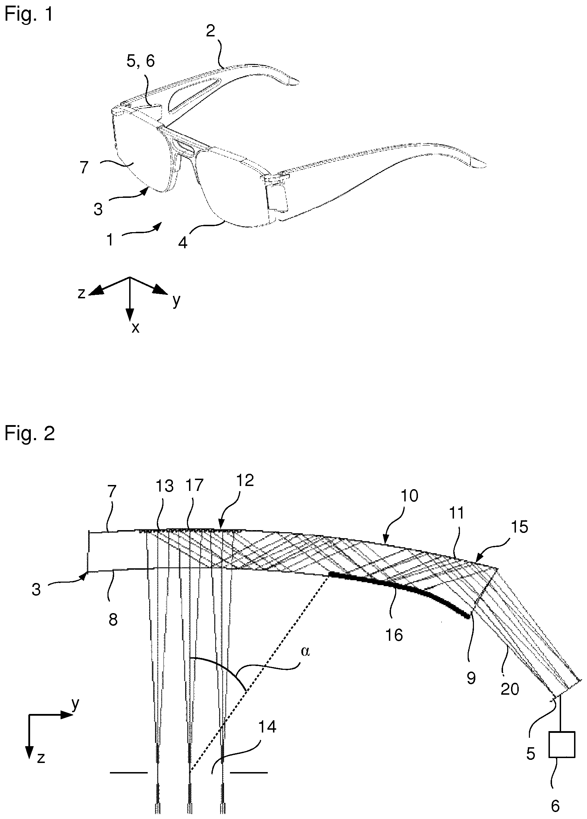

Bei der in Fig. 1 gezeigten Ausführungsform umfasst die erfindungsgemäße Anzeigevorrichtung 1 eine auf den Kopf eines Benutzers aufsetzbare Haltevorrichtung 2, die z.B. in Art eines herkömmlichen Brillegestells ausgebildet sein kann, sowie ein erstes und ein zweites Brillenglas 3, 4, die an der Haltevorrichtung 2 befestigt sind. Die Haltevorrichtung 2 mit den Brillengläsern 3 und 4 kann z.B. als Sport- oder Sonnenbrille ausgebildet sein, wobei dem Benutzer über das erste Brillenglas 3 ein virtuelles Bild in sein Gesichtsfeld eingespiegelt werden kann, wie nachfolgend beschrieben wird. Die Brillengläser 3, 4 sind so ausgebildet, dass sie keine optische Abbildungswirkung aufweisen und somit keine Fehlsichtigkeitskorrektur erfolgt.

Die Brillengläser 3, 4 und insbesondere das rechte Brillenglas 3 sind nur beispielshalber zusammen mit der erfindungsgemäßen Anzeigevorrichtung 1 beschrieben. Die Brillengläser 3, 4 bzw. zumindest das rechte Brillenglas 3 sind jeweils für sich als erfindungsgemäßes Brillenglas 3, 4 ausgebildet.

Wie am besten aus der vergrößerten Detailschnittansicht des ersten (rechten) Brillenglases 3 ersichtlich ist (die Haltevorrichtung 2 ist nicht dargestellt), umfasst die Anzeigevorrichtung 1 ein Bilderzeugungsmodul 5 sowie eine Steuereinheit 6. Sowohl das Bilderzeugungsmodul 5 als auch die Steuereinheit 6 sind rein schematisch dargestellt und bevorzugt an der Haltevorrichtung 2 befestigt.

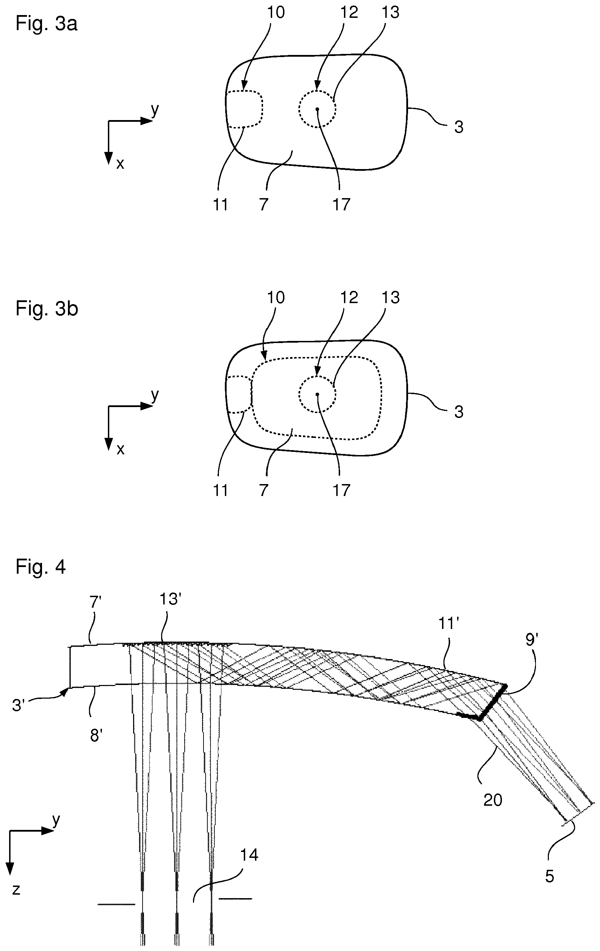

Das rechte Brillenglas 3 weist eine sphärisch gekrümmte Vorderseite 7, eine gekrümmte Rückseite 8 sowie eine Stirnfläche 9 auf. An der Vorderseite 7 ist in einem Randbereich 10, wie insbesondere aus Figur 3a zu entnehmen ist, ein Umlenkabschnitt 11 und in einem Mittelbereich 12 ein Auskoppelabschnitt 13 ausgebildet. Der Mittelbereich 12 und somit der Auskoppelbereich 13 liegen bevorzugt so, dass die Sehachse des die Anzeigevorrichtung 1 tragenden Benutzers bei Geradeausblick durch den Mittelbereich 12 und somit auch durch den Auskoppelabschnitt 13 läuft. Der entsprechende Durchstoßpunkt ist mit dem Bezugszeichen 17 bezeichnet. Der Umlenkabschnitt 11 kann beispielsweise reflektiv in der Art ausgebildet sein, dass die vom Bilderzeugungsmodul 5 kommenden Lichtstrahlen, die über die Stirnfläche 9 auf den Umlenkabschnitt 11 treffen, so umgelenkt werden, dass sie dann an der Rückseite 8 und Vorderseite 7 durch innere Totalreflexion bis zum Auskoppelabschnitt 13 geführt werden. Der Umlenkabschnitt 11 bildet somit zusammen mit der Stirnfläche 9 einen Einkoppelabschnitt 15.

Der Auskoppelabschnitt 13 ist so ausgebildet, dass er die Lichtstrahlen in Richtung einer Austrittspupille 14 hin umlenkt, an der ein Benutzer bei aufgesetzter Anzeigevorrichtung seine Augenpupille hat. Die Stirnfläche 9, der Umlenkabschnitt 11 und/oder der Auskoppelabschnitt 13 weisen eine abbildende Eigenschaft auf, die so gewählt ist, dass das mittels des Bilderzeugungsmoduls 5 erzeugte Bild dem Benutzer in der Austrittspupille 14 als virtuelles Bild dargeboten wird.

Der Auskoppelabschnitt 13 ist bevorzugt so ausgebildet, dass ein die Anzeigevorrichtung 1 tragende Benutzer das abgebildete Bild in Überlagerung mit der Umgebung wahrnehmen kann. So kann der Auskoppelabschnitt 13 z.B. als teiltransparente Fresnelstruktur ausgebildet sein. Insbesondere kann der Auskoppelabschnitt 13 als Fresnelstruktur gemäß der in der WO 2010/097442 A1 und in der WO 2010/097439 A1 beschriebenen Art und Weise verwirklichst sein, wobei die entsprechende Beschreibung samt Figuren dieser Druckschriften hiermit in die vorliegende Offenbarung aufgenommen wird.

Die in Figur 2 gezeigte Ausführungsform zeichnet sich durch eine große Austrittspupille bzw. Eyebox 14 (der Bereich, der durch die Anzeigevorrichtung 1 bereitgestellt wird und in dem sich das Auge des Benutzers bewegen und er stets noch das ausgekoppelte Bild wahrnehmen kann) und ein großes Sichtfeld (field of view) aus.

Dies wird in vorteilhafter Weise dadurch erreicht, dass der Randbereich 10, in dem der Einkoppelabschnitt 15 ausgebildet ist, eine größere Dicke aufweist im Vergleich zu einem herkömmlichen Design, das in Fig. 4 schematisch dargestellt ist (die Bezugszeichen der entsprechenden Elemente im Vergleich zu der erfindungsgemäßen Ausbildung sind jeweils mit Apostroph angegeben).

Bei einem herkömmlichen Design ist z.B. die Vorderseite 7' und Rückseite 8' des Brillenglases 3' jeweils als sphärische Fläche ausgebildet, die konzentrisch angeordnet sind, so dass für den Benutzer keine Fehlsichtigkeitskorrektur bewirkt wird. Das Brillenglas 3' ist bezüglich seiner optischen Abbildungswirkung neutral, da es durch den sphärischen Krümmungsverlauf von Vorder- und Rückseite 7', 8' als konzentrischer Meniskus bzw. Null-Meniskus ausgebildet ist und somit eine Abbildung mit einer Brechkraft von Null durchführt. Diese optische Abbildungswirkung des Brillenglases 3' kann auch als vorbestimmte optische Abbildungsfunktion bezeichnet werden. Durch die beschriebene Ausbildung des Brillenglases 3' weist es eine konstante Dicke auf. Die konstante Dicke führt jedoch zu der Schwierigkeit, dass bei der Abbildung eine Vignettierung auftreten kann, da der Bündeldurchmesser der vom Bilderzeugungsmodul 5 kommenden und für die Ausleuchtung der Austrittspupille 14 benötigten Strahlen in der yz-Ebene im Bereich der Stirnfläche 9 größer ist als die entsprechende Abmessung der Stirnfläche 9. Die entsprechenden Lichtstrahlen 20, die vom Bilderzeugungsmodul 5 kommen, würden daher auf die Rückseite 8 treffen, wie in Fig. 4 dargestellt ist. Diese Strahlen 20 würden somit unter einem anderen Winkel als eingezeichnet auf den Umlenkabschnitt 11 treffen und somit nicht zur Austrittspupille 14 gelangen und daher vignettiert werden. Der in Fig. 4 dargestellte Strahlenverlauf wurde ausgehend von der Austrittspupille 14 bis zum Bilderzeugungsmodul 5 berechnet, wobei als Näherung die brechende Wirkung beim Übergang Stirnfläche 9' bzw. Rückseite 8' und Umgebung vernachlässigt wurde, um die beschriebene Vignettierung deutlich darstellen zu können.

Erfindungsgemäß ist daher die Dicke im Randbereich 10 größer gewählt, so dass keine Vignettierung auftritt und alle Strahlen vom Bilderzeugungsmodul 5 in der in Fig. 2 gezeigten Weise über die Stirnfläche 9 auf den Umlenkabschnitt 11 treffen. Dies führt natürlich dazu, dass die vorbestimmte optische Abbildungsfunktion (hier keine Fehlsichtigkeitskorrektur bzw. Abbildungswirkung mit Brechkraft null) im Randbereich 10 nicht mehr vorhanden ist, da nun der Krümmungsverlauf im Randbereich ein anderer ist als der ursprünglich vorbestimmte Krümmungsverlauf. Dies ist jedoch in der Praxis nicht störend, da man den Randbereich 10 bei einer normalen Nutzung der Anzeigevorrichtung 1 nicht benötigt. In anderen Worten, der Benutzer wird bei aufgesetzter Anzeigevorrichtung 1 nicht durch den Randbereich 10 des Brillenglases 3 blicken.

Der Randbereich 10 beginnt bevorzugt erst bei einer Blickrichtung von größer als 20°, 30° oder 40°. Unter einer Blickrichtung von x° wird hier insbesondere der Winkel α=x° der Sehachse bezogen auf die Sehachse bei Geradeausblick verstanden (Fig. 2).

Bevorzugt ist lediglich die Krümmung der Rückseite 8 im Randbereich 10 geändert, so dass es von außen kaum sichtbar ist, dass eine Änderung der Dicke des Brillenglases 3 vorliegt. Der geänderte Krümmungsverlauf 16 der Rückseite 8 im Randbereich 10 führt somit zu einer Abbildungswirkung mit einer von null verschiedenen Brechkraft.

Insbesondere kann die geänderte Krümmung 16 der Rückseite 8 im Randbereich 10 so gewählt sein, dass diese zur Verbesserung der Abbildung des mittels des Bilderzeugungsmoduls 5 erzeugten Bildes dient. Der Krümmungsverlauf 16 kann z.B. als Freiformfläche ausgelegt sein, die zwar gekrümmt ist, aber weder sphärisch noch rotationssymmetrisch ist. Bevorzugt weist sie auch keine Spiegelsymmetrie auf.

Bei der hier beschriebenen Ausführungsform ist der Umlenkabschnitt 11 im gesamten Randbereich 10 ausgebildet, wobei sich der Randbereich 10, in Draufsicht auf das Brillenglas gesehen, nur entlang eines Teils des Umfangs erstreckt. Natürlich kann der Randbereich 10 eine Ausdehnung in Umfangsrichtung aufweisen, die größer ist als die entsprechende Ausdehnung des Umlenkabschnittes 11 in Umfangsrichtung. Insbesondere kann der Randbereich 10 ringförmig ausgebildet sein, wie in Fig. 3b dargestellt ist. Der Randbereich 10 erstreckt sich somit entlang des gesamten Umfangs des Brillenglases 3. Der Umlenkabschnitt 11 hingegen erstreckt sich wiederum nur entlang eines Teils des Umfangs. Wenn der Randbereich 10 ringförmig ausgebildet ist, lässt sich das Brillenglas 3 leichter herstellen.

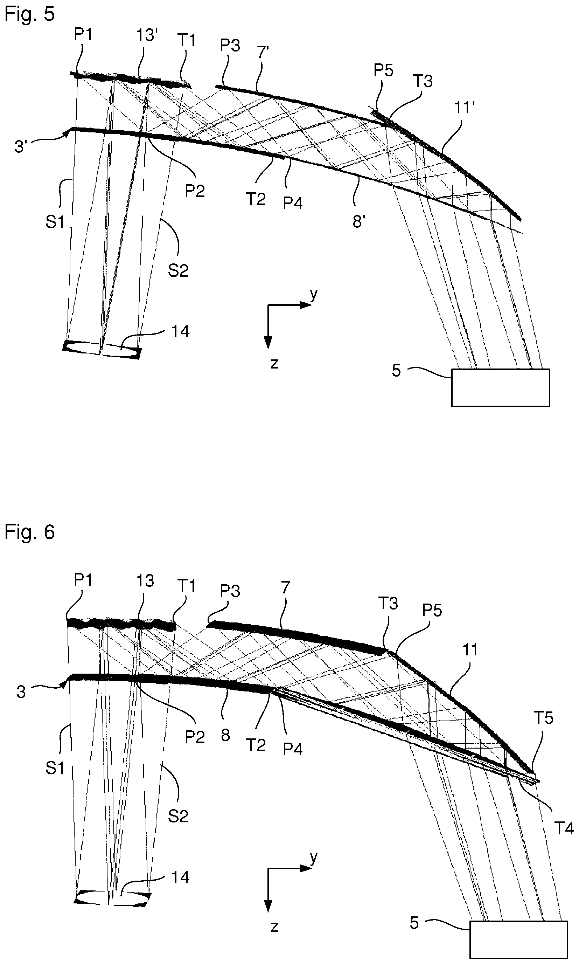

In Figur 5 ist in ähnlicher Weise wie in Fig. 4 eine Schnittansicht eines herkömmlichen Brillenglases 3' gezeigt. Ein Strahl S1, der vom linken Rand der Eyebox 14 an der Stelle P1 auf den Auskoppelabschnitt 13' trifft (es wird der Strahlverlauf von der Eyebox 14 zum Bilderzeugungsmodul betrachtet; im Betrieb ist die Ausbreitungsrichtung natürlich dazu entgegengesetzt), gelangt über die Totalreflexionspunkte P2, P3 und P4 zum Punkt P5 im Umlenkabschnitt 11'. Der Punkt P5 verkörpert den notwendigen am weitesten links liegenden Punkt des Umlenkabschnitts 11'.

Der Strahl S2, der vom rechten Rand der Eyebox 14 über den Punkt T1 am Auskoppelabschnitt 13' und den Totalreflexionspunkt T2 wieder nach oben läuft, müsste nun am Punkt T3 erneut totalreflektiert werden. Der Punkt T3 liegt jedoch schon im Umlenkabschnitt 11', so dass dieser Strahl vignettiert werden würde. Dies trifft auch für alle weiteren Strahlen zu, die rechts vom Punkt P5 noch eine Totalreflexion erhalten müssten. Diese tragen alle nicht zur Abbildung bei oder sind eventuelle Falschlichtquellen.

Erfindungsgemäß wird daher die Dicke des Randbereichs 10 derart erhöht, dass nun der Punkt T3 links vom Punkt P5 liegt und somit keine Durchdringung des sphärischen Brillenglasbereichs der Vorderseite 7 mit dem Auskoppelabschnitt 11 vorhanden ist, wie in Fig. 6 gezeigt ist. Damit liegt auch kein Aperturbeschnitt mehr vor und es können alle Strahlen vom Bilderzeugungsmodul 5 bis zur Austrittspupille 14 abgebildet werden. Der Strahl S2 z.B. wird am Punkt T4 erneut totalreflektiert und trifft dann am Punkt T5 auf den Umlenkabschnitt 11.

Die erfindungsgemäße Anzeigevorrichtung 1 ist insbesondere so ausgebildet, dass alle Strahlen, die bis zur Austrittspupille 14 geführt werden, die gleiche Anzahl von Reflexionen bei der Führung vom Umlenkabschnitt 11 bis zum Auskoppelabschnitt 13 an der Vorder- und Rückseite 7, 8 des Brillenglases 3 erfahren.

Bei den beschriebenen Ausführungsformen der erfindungsgemäßen Anzeigevorrichtung 1 erfolgt die Einkopplung des virtuellen Bildes in das Gesichtsfeld des Benutzers über das rechte Brillenglas 3. Natürlich ist auch eine Einkopplung nur über das linke Brillenglas 4 möglich. Des weiteren kann die Anzeigevorrichtung 1 so ausgebildet sein, dass Informationen über beide Brillengläser 3, 4 eingespiegelt werden. Dabei kann die Einspiegelung so erfolgen, dass ein dreidimensionaler Bildeindruck entsteht.

Die vorbestimmte optische Abbildungswirkung der Brillengläser 3 und 4 ist bei den beschriebenen Ausführungsbeispielen eine Abbildungswirkung mit Brechkraft null. Natürlich können die Brillengläser auch eine Brechkraft von ungleich null aufweisen und insbesondere zur Korrektur von Fehlsichtigkeiten ausgelegt sein. Auch in diesem Fall liegt dann im Randbereich eine größere Dicke vor im Vergleich zu der Dicke, die sich bei dem Krümmungsverlauf von Vorder- und Rückseite 7, 8 für die vorbestimmte optische Abbildungsfunktion ergeben würde.

Die Brillengläser 3, 4 können z. B. aus einem Glas oder auch aus Kunststoff hergestellt sein und können natürlich auch bei anderen auf den Kopf des Benutzers aufsetzbaren Anzeigevorrichtungen verwendet werden.

## Patentansprüche

1. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik (3, 4), die ein Brillenglas (3, 4) aufweist und die das erzeugte Bild im auf dem Kopf aufgesetzten Zustand der Haltevorrichtung (2) so abbildet, dass es der Benutzer als virtuelles Bild wahrnehmen kann,
wobei das Brillenglas
eine gekrümmte Vorderseite (7) und eine gekrümmte Rückseite (8),
und, in Draufsicht auf das Brillenglas (3, 4) gesehen, einen Einkoppelabschnitt (15) in einem Randbereich (10) des Brillenglases (3, 4) und einen davon beabstandeten Auskoppelabschnitt (13), der in einem Mittelbereich (12) des Brillenglases (3, 4) liegt, aufweist,
wobei das Brillenglas (3, 4) das erzeugte Bild, das über den Einkoppelabschnitt (15) des Brillenglases (3, 4) in das Brillenglas (3, 4) eingekoppelt ist, im Brillenglas (3, 4) durch Reflexionen an der Vorderseite (7) und/oder der Rückseite (8) bis zum Auskoppelabschnitt (13) führt und über den Auskoppelabschnitt (13) aus dem Brillenglas (3, 4) auskoppelt, und
wobei das Brillenglas (3, 4) eine vorbestimmte optische Abbildungsfunktion bereitstellt, die durch einen vorbestimmten Krümmungsverlauf der Vorderseite (7) und einen vorbestimmten Krümmungsverlauf der Rückseite (8) vorgegeben ist,
**dadurch gekennzeichnet, dass**
zur Verringerung einer bei der Führung des erzeugten Bildes über den Einkoppelabschnitt (15) durch das Brillenglas (3, 4) bis zum Auskoppelabschnitt (13) auftretenden Vignettierung der Krümmungsverlauf der Rückseite (8) im Randbereich (10) vom entsprechenden vorbestimmten Krümmungsverlauf der Rückseite (8) im Randbereich (10) so abweicht, dass eine größere Dicke des Brillenglases (3, 4) im Randbereich (10) im Vergleich zu der Dicke im Randbereich (10) vorliegt, die sich durch den vorbestimmten Krümmungsverlauf ergeben würde,
wobei das Brillenglas (3, 4) die größere Dicke nur im Randbereich (10) aufweist und
wobei der abweichende Krümmungsverlauf (16) so ausgelegt ist, dass ein Abbildungsfehler des Brillenglases beim Führen des erzeugten Bildes korrigiert wird.

2. Anzeigevorrichtung nach Anspruch 1, **dadurch gekennzeichnet, dass** sich der Randbereich (10) mit der größeren Dicke, in Draufsicht auf das Brillenglas (3, 4) gesehen, ringförmig erstreckt.

3. Anzeigevorrichtung nach Anspruch 1, **dadurch gekennzeichnet, dass** sich der Randbereich (20) mit der größeren Dicke, in Draufsicht auf das Brillenglas (3, 4) gesehen, in Umfangsrichtung des Brillenglases (3, 4) entlang nur eines Teils des Umfangs und nicht entlang des gesamten Umfangs erstreckt.

4. Anzeigevorrichtung nach einem der obigen Ansprüche, **dadurch gekennzeichnet, dass** der Einkoppel- und/oder Auskoppelabschnitt (15, 13) eine abbildende Wirkung aufweisen/aufweist.

5. Anzeigevorrichtung nach einem der obigen Ansprüche, **dadurch gekennzeichnet, dass** der Einkoppelabschnitt (15) eine Kollimationswirkung aufweist, und/oder dass der Einkoppel-und/oder Auskoppelabschnitt (15, 13) eine Strahlengangfaltung bewirken/bewirkt.

6. Anzeigevorrichtung nach einem der obigen Ansprüche, **dadurch gekennzeichnet, dass** nur der Krümmungsverlauf der Rückseite (8) im Randbereich (10) vom entsprechenden vorbestimmten Krümmungsverlauf der Rückseite (8) im Randbereich (10) abweicht.

7. Anzeigevorrichtung nach einem der obigen Ansprüche, **dadurch gekennzeichnet, dass** der abweichende Krümmungsverlauf (16) einer nicht sphärischen Fläche entspricht.

8. Anzeigevorrichtung nach einem der obigen Ansprüche, **dadurch gekennzeichnet, dass** der Randbereich ab einer Blickrichtung von größer als 20°, 30° oder 40° beginnt.

9. Anzeigevorrichtung nach einem der obigen Ansprüche, **dadurch gekennzeichnet, dass** der Einkoppelabschnitt (15) einen Bereich einer die Vorder- und Rückseite (7, 8) verbindenden Stirnfläche (9) des Brillenglases (3, 4) umfasst, wobei bevorzugt der Bereich der Stirnfläche (9) eine abbildende Wirkung aufweist.

10. Anzeigevorrichtung nach einem der obigen Ansprüche, **dadurch gekennzeichnet, dass** der Einkoppelabschnitt (15) refraktiv und/oder reflektiv ist.

11. Anzeigevorrichtung nach einem der obigen Ansprüche, **dadurch gekennzeichnet, dass** die Abbildungsoptik eine Kollimationsoptik aufweist, die zwischen dem Brillenglas (3, 4) und dem Bildgebermodul (5) angeordnet ist.

12. Anzeigevorrichtung nach einem der obigen Ansprüche, **dadurch gekennzeichnet, dass** der abweichende Krümmungsverlauf (16) so ausgelegt ist, dass ein Abbildungsfehler der Abbildungsoptik korrigiert wird.

## Claims

1. Display device with
a holder (2) that can be fitted on the head of a user,
an image-generating module (5) which generates an image and is secured to the holder (2), and
an imaging optical system (3, 4) which is secured to the holder (2) and which has a spectacle lens (3, 4) and which, when the holder (2) is fitted on the head, images the generated image such that the user can perceive it as a virtual image,
wherein the spectacle lens comprises
a curved front side (7) and a curved rear side (8),
and, when the spectacle lens (3, 4) is viewed from above, a coupling-in section (15) in an edge area (10) of the spectacle lens (3, 4) and a coupling-out section (13) spaced apart therefrom, said coupling-out section lying in a central area (12) of the spectacle lens (3, 4);
wherein the spectacle lens (3, 4) guides the generated image, which is coupled into the spectacle lens (3, 4) via the coupling-in section (15) of the spectacle lens (3, 4), in the spectacle lens (3, 4) by reflections on the front side (7) and/or the rear side (8) as far as the coupling-out section (13) and couples it out of the spectacle lens (3, 4) via the coupling-out section (13), and wherein the spectacle lens (3, 4) provides a predetermined optical imaging function which is predefined by a predetermined curvature profile of the front side (7) and a predetermined curvature profile of the rear side (8),
**characterized in that**,
in order to reduce vignetting occurring when the generated image is guided via the coupling-in section (15) through the spectacle lens (3, 4) as far as the coupling-out section (13), the curvature profile of the rear side (8) in the edge area (10) differs from the corresponding predetermined curvature profile of the rear side (8) in the edge area (10) such that there is a greater thickness of the spectacle lens (3, 4) in the edge area (10) in comparison with the thickness in the edge area (10) that would result due to the predetermined curvature profile, wherein the spectacle lens (3, 4) has the greater thickness only in the edge area (10), and wherein the differing curvature profile (16) is designed such that an imaging error of the spectacle lens, which occurs when the generated image is guided, is corrected.

2. Display device according to claim 1, **characterized in that** the edge area (10) with the greater thickness, when the spectacle lens (3, 4) is viewed from above, extends annularly.

3. Display device according to claim 1, **characterized in that** the edge area (20) with the greater thickness, when the spectacle lens (3, 4) is viewed from above, extends in the circumferential direction of the spectacle lens (3, 4) along only a part of the circumference and not along the entire circumference.

4. Display device according to one of the above claims, **characterized in that** the coupling-in and/or coupling-out section (15, 13) has an imaging effect.

5. Display device according to one of the above claims, **characterized in that** the coupling-in section (15) has a collimation effect and/or that the coupling-in and/or coupling-out section (15, 13) brings about a folding of the beam path.

6. Display device according to one of the above claims, **characterized in that** only the curvature profile of the rear side (8) in the edge area (10) differs from the corresponding predetermined curvature profile of the rear side (8) in the edge area (10).

7. Display device according to one of the above claims, **characterized in that** the differing curvature profile (16) corresponds to a non-spherical surface.

8. Display device according to one of the above claims, **characterized in that** the edge area begins from a direction of view greater than 20°, 30° or 40°.

9. Display device according to one of the above claims, **characterized in that** the coupling-in section (15) comprises an area of an end face (9) of the spectacle lens (3, 4) connecting the front and rear sides (7, 8), wherein the area of the end face (9) preferably has an imaging effect.

10. Display device according to one of the above claims, **characterized in that** the coupling-in section (15) is refractive and/or reflective.

11. Display device according to one of the above claims, **characterized in that** the imaging optical system has collimation optics which are arranged between the spectacle lens (3, 4) and the image-generating module (5).

12. Display device according to one of the above claims, **characterized in that** the differing curvature profile (16) is designed such that an imaging error of the imaging optical system is corrected.

## Revendications

1. Dispositif d'affichage comprenant
un dispositif de retenue (2) qui peut être placé sur la tête d'un utilisateur,
un module de génération d'image (5) qui est fixé au dispositif de retenue (2) et qui génère une image,
et
une optique de reproduction (3, 4) qui est fixée au dispositif de retenue (2), qui comporte un verre de lunettes (3, 4) et qui reproduit l'image générée lorsque le dispositif de retenue (2) est placé sur la tête de sorte que l'utilisateur peut le percevoir comme une image virtuelle,
le verre de lunettes comportant
une face avant incurvée (7) et une face arrière incurvée (8),
et, en vue de dessus du verre de lunettes (3, 4), une portion d'injection par couplage (15) située dans une région de bord (10) du verre de lunettes (3, 4) et une portion de sortie par couplage (13) qui est à distance de ladite portion d'injection par couplage et qui est située dans une région centrale (12) du verre de lunettes (3, 4),
le verre de lunettes (3, 4) guidant l'image générée, qui est injectée par couplage dans le verre de lunettes (3, 4) par le biais de la portion d'injection par couplage (15) du verre de lunettes (3, 4), jusqu'à la portion de sortie par couplage (13) par des réflexions sur la face avant (7) et/ou la face arrière (8) et la délivre par couplage en sortie du verre de lunettes (3, 4) par le biais de la portion de sortie par couplage (13), et
le verre de lunettes (3, 4) fournissant une fonction de reproduction optique prédéterminée qui est spécifiée par un profil de courbure prédéterminé de la face avant (7) et un profil de courbure prédéterminé de la face arrière (8),
**caractérisé en ce que**
pour réduire un vignettage qui se produit lorsque l'image générée est guidée par le biais de la portion d'injection par couplage (15) à travers le verre de lunettes (3, 4) jusqu'à la portion de sortie par couplage (13), le profil de courbure de la face arrière (8) dans la région de bord (10) dévie du profil de courbure prédéterminé correspondant de la face arrière (8) dans la région de bord (10) de sorte que l'épaisseur du verre de lunette (3, 4) dans la région de bord (10) soit supérieure à l'épaisseur dans la région de bord (10) qui résulterait du profil de courbure prédéterminé,
le verre de lunettes (3, 4) ayant la plus grande épaisseur uniquement dans la région de bord (10) et
le profil de courbure déviant (16) étant conçu de manière à corriger une erreur de reproduction du verre de lunettes lors du guidage de l'image générée.

2. Dispositif d'affichage selon la revendication 1, **caractérisé en ce que** la région de bord (10) ayant la plus grande épaisseur, en vue de dessus du verre de lunettes (3, 4), s'étend annulairement.

3. Dispositif d'affichage selon la revendication 1, **caractérisé en ce que** la région de bord (20) ayant la plus grande épaisseur, en vue de dessus du verre de lunettes (3, 4), s'étend dans la direction périphérique du verre de lunettes (3, 4) le long de seulement une partie de la périphérie et ne s'étend pas sur toute la périphérie.

4. Dispositif d'affichage selon l'une des revendications précédentes, **caractérisé en ce que** les portions d'injection par couplage et/ou de sortie par couplage (15, 13) présentent un effet de reproduction.

5. Dispositif d'affichage selon l'une des revendications précédentes, **caractérisé en ce que** la portion d'injection d'entrée (15) présente un effet de collimation et/ou **en ce que** les portions d'injection par couplage et/ou de sortie par couplage (15, 13) provoquent un repliement de trajet de rayons.

6. Dispositif d'affichage selon l'une des revendications précédentes, **caractérisé en ce que** seul le profil de courbure de la face arrière (8) dans la région de bord (10) dévie du profil de courbure prédéterminé correspondant de la face arrière (8) dans la région de bord (10).

7. Dispositif d'affichage selon l'une des revendications précédentes, **caractérisé en ce que** le profil de courbure déviant (16) correspond à une surface non sphérique.

8. Dispositif d'affichage selon l'une des revendications précédentes, **caractérisé en ce que** la région de bord commence à partir d'une direction de visée supérieure à 20°, 30° ou 40°.

9. Dispositif d'affichage selon l'une des revendications précédentes, **caractérisé en ce que** la portion d'injection par couplage (15) comprend une région d'une surface frontale (9) du verre de lunettes (3, 4) qui relie les faces avant et arrière (7, 8), de préférence la région de la surface frontale (9) ayant un effet de reproduction.

10. Dispositif d'affichage selon l'une des revendications précédentes, **caractérisé en ce que** la portion d'injection par couplage (15) est réfractive et/ou réfléchissante.

11. Dispositif d'affichage selon l'une des revendications précédentes, **caractérisé en ce que** l'optique de reproduction comporte une optique de collimation qui est disposée entre le verre de lunettes (3, 4) et le module de génération d'image (5).

12. Dispositif d'affichage selon l'une des revendications précédentes, **caractérisé en ce que** le profil de courbure déviant (16) est conçu de manière à corriger une erreur de reproduction de l'optique de reproduction.
